Europäisches Patentamt

European Patent Office

Office européen des brevets

(11) Numéro de publication: **0 159 937**
**B1**

(12) **FASCICULE DE BREVET EUROPEEN**

(45) Date de publication du fascicule du brevet: 07.11.90

(51) Int. Cl.⁵: **H 01 M 4/02,** H 01 M 4/40, H 01 M 4/66, H 01 M 10/40

(21) Numéro de dépôt: 85400690.5

(22) Date de dépôt: 05.04.85

(54) Anodes denses d'alliages de lithium pour batteries tout solide.

(30) Priorité: 11.04.84 CA 451783

(43) Date de publication de la demande:
30.10.85 Bulletin 85/44

(45) Mention de la délivrance du brevet:
07.11.90 Bulletin 90/45

(84) Etats contractants désignés:
AT BE CH DE GB IT LI LU NL SE

(56) Documents cités:
DE-A-2 834 485
GB-A-2 026 762
US-A-4 162 202
US-A-4 224 390
US-A-4 330 601

Le dossier contient des informations techniques présentées postérieurement au dépôt de la demande et ne figurant pas dans le présent fascicule.

(73) Titulaire: SOCIETE NATIONALE ELF AQUITAINE
Tour Aquitaine
F-92400 Courbevoie (FR)

(72) Inventeur: Belanger, André
625 Blain
Sainte-Julie Québec J0L 200 (CA)
Inventeur: Robitaille, Michel
325 chemin du Fer à Cheval
Sainte-Julie Québec J0L 200 (CA)

(74) Mandataire: Boillot, Marc
SOCIETE NATIONALE ELF AQUITAINE Division
Propriété Industrielle Tour Elf
F-92078 Paris la Défense Cédex 45 (FR)

(56) Documents cités:

JOURNAL OF THE ELECTROCHEMICAL
SOCIETY, vol. 129, no. 5, mai 1982, pages
901-907, Manchester, New York, US; A.S.
BARANSKI et al.: "The formation of lithiumaluminum alloys at an aluminum electrode in
propylene carbonate"

Courier Press, Leamington Spa, England.

EP 0 159 937 B1

(56) Documents cités:
**SOLID SATE IONICS, vol. 13, no. 4, aou7t 1984, pages 329-334, North-Holland, Amsterdam, NL; J.R. OWEN et al.: "Thin film lithium aluminium negative plate material"**

# EP 0 159 937 B1

**Description**

L'invention concerne un accumulateur électrochimique préparé à l'état déchargé ou partiellement déchargé ainsi qu'une méthode de préparation d'un accumulateur électrochimique à l'état chargé à partir de l'accumulateur correspondant à l'état déchargé.

Le développement d'accumulateurs au lithium fonctionnant à basse température est tributaire de la conception d'anodes de lithium suffisamment stables et réversibles. Qu'il s'agisse de milieux organiques ($LiClO_4$ dans le carbonate de propylène) ou d'électrolytes solides ($Li_3N$ ou complexes polyéther-sel de lithium), l'électrode de lithium représente la constituante de l'accumulateur qui faillit le plus souvent à la tâche à cause de la passivation de l'électrode et la formation de dendrites de surfaces. Ce phénomène limite sérieusement la vie utile de l'accumulateur.

La passivation est due essentiellement à un problème d'instabilité thermodynamique du lithium par rapport à certains groupements fonctionnels comme C—O, C=O, C—OH, etc. . . qui provoque des réactions de corrosion avec accumulation des produits de réaction dans l'interface. Ces produits empêchent la déposition dense et uniforme du lithium. Les dendrites apparaissent à la recharge lorsqu'un nombre de paramètres expérimentaux concourent à leur formation: basse température, courants de recharge élevés, surface passivée et rugueuse, présences d'aspérités, etc. . .

L'usage d'alliages de lithium dont l'activité chimique est plus faible que le lithium, permet d'éliminer la plupart des problèmes liés à la croissance dendritique. La plupart des alliages d'intérêts électrochimiques (LiAL 50% at.) sont disponibles en poudre car ils sont fragiles et cassants. On peut aussi en préparer des films minces de matériaux composites bien adaptés aux accumulateurs à électrolytes polymères, tel qu'il est décrit dans les demandes de brevets français de Michel ARMAND et Michel DUCLOT Nos 78.32976, 78.32977 et 78.32978, maintenant publiées sous les Nos 2 442 512, 2 552 514 et 2 442 513, ainsi que la demande de brevet européen n° 0098772.

Certains alliages comme l'alliage de lithium et d'aluminium renfermant 90% at. lithium sont suffisamment ductiles pour être laminés en films minces, mais ils sont inacceptables car d'une part leur potentiel chimique est si près du lithium qu'ils n'empêchent pas la croissance dendritique, et d'autre part, à cette composition, des phases irréversibles sont formées en cours de cyclage et nuisent sérieusement au transport du lithium. Souvent, à des températures supérieures à 80°C, les anodes composites utilisées pour augmenter la surface réelle de l'électrode vieillissent prématurément en cours de cyclage. Ce phénomène peut s'expliquer par une réaction généralisée de l'alliage de lithium sur l'électrolyte. Pour réduire la vitesse de réaction on doit imaginer l'alliage ne contactant l'électrolyte que par un plan. Ceci implique l'usage d'alliages minces, compacts et uniformes de lithium. La caractéristique ce minceur du film d'alliage est imposée par le fait qu'à des températures voisines ou inférieures à 100°C le coefficient de diffusion du métal alcalin dans l'alliage considéré est souvent de l'ordre de $10^{-9}$ $cm^2$ $sec^{-1}$ ou inférieur. Aussi pour utiliser toute la capacité des anodes denses il est essentiel de faire appel à des alliages minces. Malheureusement, ces alliages ne sont pas disponibles commercialement.

Afin de surmonter les difficultés et les désavantages mentionnés ci-dessus, nous avons mis au point un accumulateur électrochimique préparé à l'état déchargé qui comporte une anode comprenant un feuillard métallique mince, ledit feuillard formant un précurseur d'une anode dense constituée d'un feuillard métallique compact allié à un métal alcalin, un électrolyte solide polymère ainsi qu'une cathode à base d'oxyde, de sulfure ou d'halogénure élaborée dans son état déchargé et constituant une source de métal alcalin, ladite cathode étant capable de libérer au moins une partie du métal alcalin sous l'effet d'une recharge, de telle sorte que le métal alcalin est introduit dans le feuillard métallique pour produire l'anode dense consistant en le feuillard métallique compact allié avec le métal alcalin, le feuillard métallique mince constituant l'anode de l'accumulateur préparé à l'état déchargé ayant une épaisseur telle que ladite anode dense ait une épaisseur comprise entre 5 µm et 100 µm.

Le feuillard métallique est de préférence constitué d'un feuillard d'un métal choisi parmi l'aluminium, le magnésium et l'étain. Quant au métal alcalin, on utilise de préférence le lithium.

Selon une réalisation préférée de l'invention, lorsque l'on utilise un feuillard d'aluminium et que le métal alcalin est le lithium, la capacité de la cathode exprimée en Coulombs est choisie de façon à ce que lors de la recharge effectuée à une intensité de courant convenable, on obtienne un alliage du feuillard d'aluminium et du lithium dont la teneur en atomes de lithium est d'au moins 30%.

Quant à l'électrolyte solide polymère, on choisira de préférence un électrolyte polymère, par exemple à base de polyéther, de préférence associé à un sel de lithium, par exemple $LiClO_4$.

En ce qui regarde la cathode, la nature de cette dernière peut varier à la condition que le métal alcalin, notamment le lithium puisse s'en libérer d'une façon réversible pour s'allier au métal du feuillard métallique. De préférence, on choisit la cathode parmi $Li_xTiS_2$ et $Li_xMoO_2$, ou $0<x<2$, et $Li_xV_6O_{13}$ où $0<x<8$.

On préfère que l'anode soit constituée d'un feuillard d'aluminium, d'étain ou de magnésium sont l'épaisseur varie entre environ 3 µm et environ 50 µm, que l'électrolyte comprenne un film mince de polyoxyéthylène et de $LiClO_4$ dont l'épaisseur se situe à une valeur entre 25 µm et 150 µm et la cathode est une électrode composite de $LiTiS_2$ dont l'épaisseur varie entre environ 25 µm et 100 µm.

Le feuillard métallique peut comprendre un colaminage partiel du métal alcalin sur ledit feuillard.

De même, au lieu de se servir au départ d'un feuillard à 100% d'aluminium, on pourrait utiliser un feuillard d'aluminium renfermant déjà des conglomérats d'un composé intermétallique, notamment LiAl

3

ou LiAl₃. Ces conglomérats fourniraient à la suite d'une recharge le lithium nécessaire pour compenser toute irréversibilité. Bien sûr, toute autre technique permettant de déposer une quantité équivalente de lithium sur le feuillard métallique pourrait s'avérer tout à fait acceptable, notamment la déposition par voie gazeuse. Dans le même but, on peut aussi utiliser une cathode dont le composé constitutif est sursaturé en métal alcalin. Par exemple, la cathode peut être à base de $Li_xTiS_2$, où x>1, la partie excédant x=1 constituant le partie du lithium qui se piège dans l'alliage, c'est-à-dire qui devient irréversible. Par la suite, l'accumulateur est cyclé réversiblement entre $Li_1TiS_2$ et $TiS_2$.

Dans le cas où le feuillard métallique est en étain, le domaine de réversibilité du lithium se situera normalement entre environ 0 et 3,2 Li/at. Sn (0 à 76% at. Li) et pour le magnésium ce même domaine s'étendra du 1er au 4ème lithium environ (50—80% at. Li).

L'invention a aussi trait à une méthode de préparation d'un accumulateur électrochimique à l'état chargé, ledit accumulateur étant à électrolyte solide polymère et comportant une anode dense constituée d'un feuillard métallique compact allié avec un métal alcalin ladite anode présentant une épaisseur variant entre 5 μm et 100 μm et ayant une rechargeabilité s'étendant sur au moins 20 cycles, cette méthode se caractérisant en ce que l'on prépare un accumulateur électrochimique à l'état déchargé constitué d'un feuillard métallique mince formant un précurseur de l'anode dense, d'un électrolyte solide polymère et d'une cathode à base d'oxyde, de sulfur ou d'halogénure élaborée dans son état déchargé et constituant une source de métal alcalin, et l'on soumet l'accumulateur à l'état déchargé ainsi obtenue à une opération de charge pour introduire du métal alcalin dans le feuillard métallique, ladite charge étant poursuivie jusqu'à ce que l'on obtienne un alliage du feuillard métallique dont la concentration en métal alcalin permet une rechargeabilité de l'accumulateur s'étendant sur au moins 20 cycles.

Pour rendre l'accumulateur fonctionnel, la première recharge s'effectuera à une intensité de courant choisie de manière à assurer une synthèse uniforme de l'alliage constituant l'anode. Cette recharge initiale prendra habituellement entre environ 2 à 20 heures.

Selon une réalisation préférée de l'invention, le feuillard métallique, qu'il soit constitué d'aluminium, de magnésium ou d'étain, est monté sur un collecteur, lequel peut être un feuillard mince conducteur, inerte par rapport à l'alliage, par exemple, en cuivre, un plastique métallisé ou un grillage en métal, le tout dans le but d'assurer une bonne uniformité dans la distribution du potentiel.

Selon une autre réalisation préférée de l'invention, le feuillard métallique pourra contenir un certain degré de porosité de sorte à compenser l'augmentation de volume qui survient lors de la formation de l'alliage. En pratique, le métal alcalin libéré par la cathode comble les interstices définissant la porosité du feuillard métallique.

Dans les dessins qui illustrent l'invention:

La Figure 1 illustre un montage comportant un feuillard d'aluminium et une électrode auxiliaire servant de source de lithium permettant d'obtenir une anode dense;

La Figure 2 est un graphique illustrant le rythme de décroissance de l'utilisation de différents alliages LiAl au cours du cyclage en fonction de leur teneur en lithium;

La Figure 3 est un graphique montrant les courbes de décharge obtenues sur un montage $LiAl/MoO_2$ à 100°C à différentes densités de courant;

La Figure 4 est un graphique décrivant le premier cycle dans le cas de deux électrodes à base de magnésium et de lithium. La première étant cyclée entre $Li_1Mg$ et $Li_2Mg$ et la deuxième entre $Li_1Mg$ et $Li_3Mg$;

La Figure 5 est un graphique décrivant le comportement d'un alliage de lithium et d'étain formé in situ contenant 1,0 partie de lithium;

La Figure 6 est un graphique décrivant le comportement d'un alliage de lithium et d'étain formé in situ contenant 1,65 partie de lithium; et

La Figure 7 est un graphique décrivant le comportement d'un alliage de lithium et d'étain formé in situ contenant 3,2 parties de lithium.

Pour étudier les propriétés de cyclage des anodes denses selon l'invention, on a réalisé un montage expérimental qui reproduit les conditions réelles de formation de l'alliage telles l'on les retrouverait dans un accumulateur élaboré à l'état déchargé.

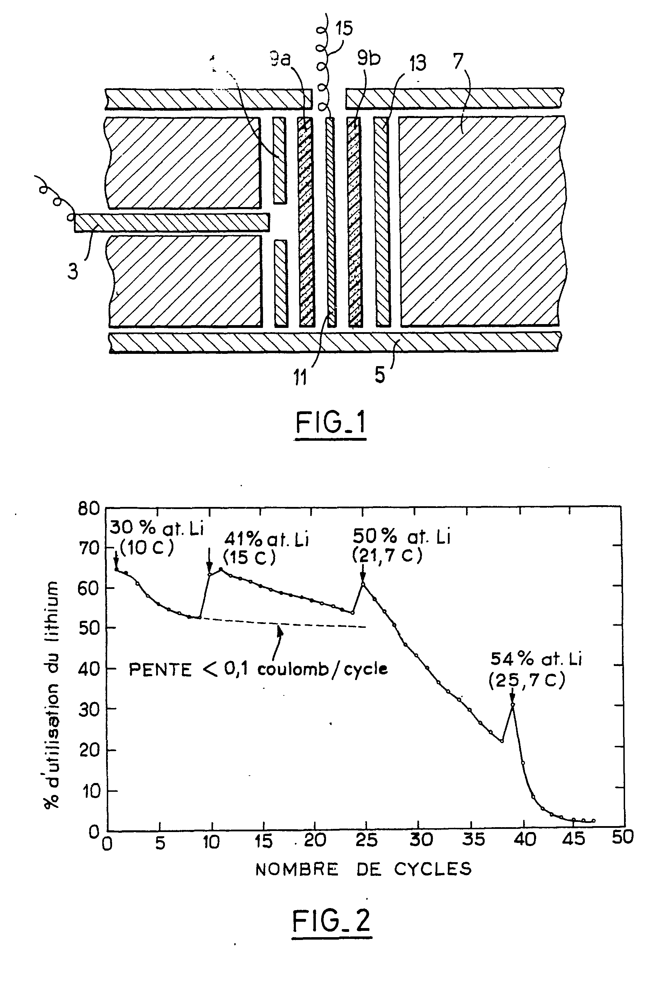

Ce montage comporte une électrode auxiliaire 1 servant de source de lithium tel qu'illustré sur la Figure 1. Le montage comprend aussi les éléments suivants: une électrode de référence au lithium 3, un boîtier de cellule en nitrure de bore 5, et un piston-collecteur de courant 7. De plus, les parties constituantes de la cellule comprennent deux électrolytes 9a, 9b dont les épaisseurs sont identiques soit 150 μm, en POE-$LiClO_4$, un feuillard d'aluminium pressé sur grillage d'acier inoxydable 11 muni d'un fil de connexion de courant 15 ainsi qu'une cathode composite $MoO_2$-POE-noir 13.

Dans ce montage, on utilise d'abord la cellule de gauche: Li métal/électrolyte/Al, pour injecter une quantité donnée de lithium dans le feuillard d'aluminium ce qui simule du côté anodique ce qui se passe lors de la charge initiale de l'accumulateur conçu à l'état déchargé. Une fois l'alliage LiAl synthétisé, on connecte la pile LiAl/électrolyte/cathode pour suivre l'évolution de l'électrode de LiAl en cours de cyclage. D'autres façons de synthétiser l'alliage dense auraient pu être envisagées comme par exemple le colaminage d'un film mince de lithium sur un feuillard d'aluminium dans des proportions qui permettent d'atteindre l'alliage voulu avec inter-diffusion des deux éléments l'un dans l'autre. Cependant, afin d'obtenir une anode dense dont les caractéristiques sont rapprochées le plus possible de celles que l'on pourrait retrouver dans un accumulateur au lithium à l'état déchargé, l'usage du montage illustré à la Figure 1 s'est révélé plus approprié. Un des avantages de ce montage réside également dans le fait qu'il permet de revenir au besoin à la pile de gauche pour augmenter progressivement la quantité de lithium du feuillard d'Al. On a ainsi le loisir de comparer les réversibilités de plusieurs compositions de LiAl dense et d'identifier celle qui possède les meilleurs performances enpile. Bien entendu, ou pourrait élaborer un montage similaire et/ou équivalent en remplaçant l'aluminium par des feuillards de magnésium ou d'étain.

Des tests de cyclage furent effectués dans le cas de l'alliage LiAl et les résultats expérimentaux sont donnés à la Figure 2. Cette figure montre le comportement au cyclage d'un feuillard d'aluminium chargé à 30, 40, 50 et 54% at. der Li. En particulier, le comportement à 30% at. Li est très significatif. Dans ce cas précis, l'utilisation du lithium de l'électrode chute à un rythme inférieure à 0,1 coulomb/cycle, comme l'indique la ligne pointillée sur la Figure 2 obtenue sur un montage identique qu'on a cyclé également à 30% at. pour plus de 20 cycles. Cette décroissance est faible par rapport à une électrode composite faite de 40% VOL de LiAl (50% at. Li)+20% VOL de noir+40% POE dont l'utilisation chute à un rythme supérieur à 1 coulomb/cycle.

L'alliage dense ainsi préparé à 30% at. lithium a des caractéristiques énergétiques qui se comparent avantageusement au LiAl-noir-POE. Ainsi, en ne tenant compte que des matériaux actifs, on obtient les données suivantes pour un pile anode/Tis$_2$.

|  | Energie massique (Wh kg$^{-1}$) | Energie volumique (Wh l$^{-1}$) |
|---|---|---|
| LiAl dense | 236 | 644 |
| LiAl composite | 232 | 451 |
| Li métallique | 545 | 1121 |

La composition de l'alliage revêt une importance certaine. Ainsi, dans le cas du LiAl, un alliage contenant moins de 30% at. Li offrirait une densité d'énergie insuffisante, inférieure à 200 Whkg$^{-1}$. De même pour des contenus supérieurs à 40% at. Li le taux de décroissance de l'utilisation au cyclage augmente sérieusement atteignant 0,6 coulomb/cycle au voisinage de 50% at. de lithium dans l'aluminium. Cet exemple montre donc l'importance de choisir très précisément, la composition de l'alliage pour en optimiser les performances.

D'un point de vue pratique, l'accumulateur sera construit à l'état déchargé et aux fins de démonstration, nous avons réalisé le montage suivant:

—cathode: LiTiS$_2$ (43% VOL LiTis$_2$-
17% VOL graphite-
40% VOL POE)—Surface
3,8 cm$^2$—épaisseur 75 μm;
—électrolyte: POE-LiClO$_4$-150 μm
—anode: feuillard d'aluminium embouti sur un
grillage d'acier inoxydable 400 mesh,
épaisseur 16 μm, surface 3,8 cm$^2$.

Les essais furent effectués à 100°C. La pile a été cyclée à un courant de charge égal à 50 μAcm$^{-2}$ en recharge et de 125 μAcm$^{-2}$ en décharge.

Lors de la première charge, 28 des 30 coulombs ont été retirés du LiTiS$_2$ (cathode) pour former l'alliage du côté de l'anode. Par la suite, au cours du cyclage, plus de 22 coulombs ont été cyclés de façon réversible sur plus de 30 cycles, ce qui représente une performance équivalente aux essais réalisés à l'aide du montage de la Figure 1.

Cet essai confirme donc que le montage expérimental simultant la construction à l'état déchargé et illustré à la Figure 1 est tout à fait valable.

Lorsque réalisée à l'état déchargé, la pile a un "shelf-life" accru puisque son potentiel à circuit-ouvert est inférieur à 0,5 volt.

La manipulation du LiTiS$_2$ exige également des environnements moins exigeants que pour manipuler les alliages LiAl. On peut procéder au montage dans l'air sec plutôt que dans l'argon ou l'hélium. Autre avantage: la synthèse in situ de l'alliage LiAl minimise également les risques de dégradation et de passivation de l'interface négative au cours des divers manipulations exécutées lors de l'assemblage.

L'excellente performance au cyclage de l'alliage LiAl à 30% lithium tient au fait qu'à cette concentration, le réseau original se conserve à peu près intact sans profonde pulvérisation du milieu, ce qui aurait pour effet d'accélérer la dégradation de l'interface et d'augmenter la résistivité de l'électrode négative par la multiplication des contacts entre différents grains.

La Figure 2 présente un graphique décrivant le rythme de décroissance de l'utilisation de différents alliages LiAl au cours du cyclage en fonction de leur teneur en lithium. On y voit l'excellent comportement de l'alliage compact de LiAl à 30% at. caractérisé par une utilisation qui se stabilise après 4 à 5 cycles comparé à des rythmes plus élevés à 41%, 50% et 54%.

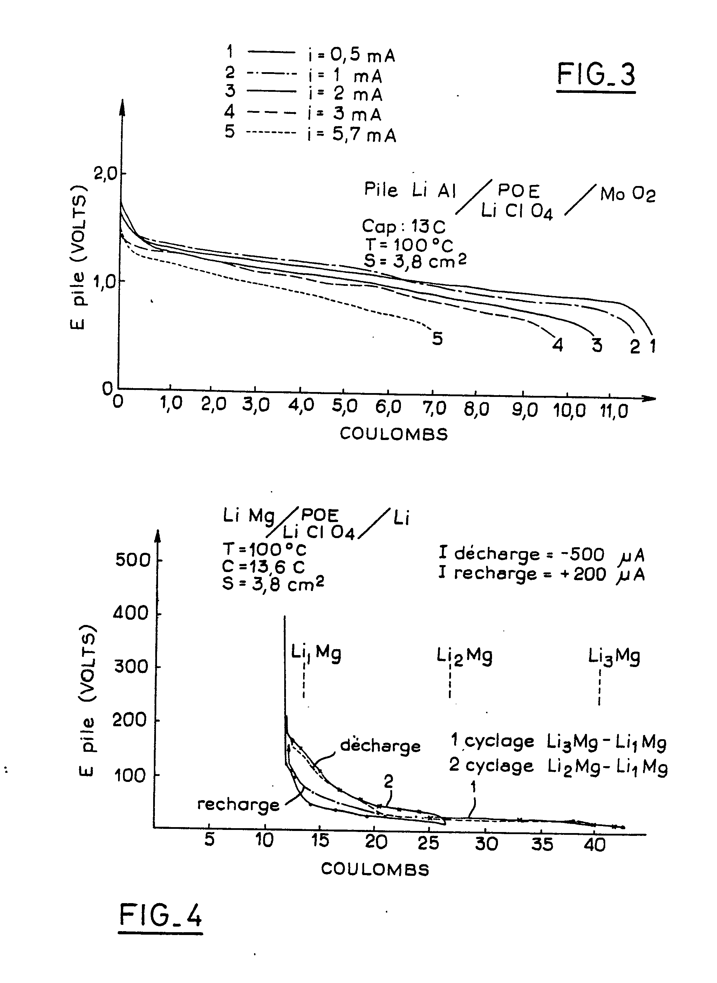

De la même manière, la Figure 3 montre les courbes de décharge obtenues sur un montage LiAl/MoO$_2$ à 100°C à différentes densités de courant. Les performances de l'électrode LiAl dense sont plus qu'intéressantes à 100°C où l'on obtient >55% d'utilisation de l'anode à 1,5 mAcm$^{-2}$ à la décharge. Par comparaison, une électrode LiAl-composite dans les mêmes conditions expérimentales donne une utilisation de 30% à 0,5 mAcm$^{-2}$ pour une composition de LiAl (50% at. Li) 35 VOL%+20 VOL% de noir d'acétylène+45 VOL% de POE.

Des essais ont été réalisés sur des feuillards métalliques de magnésium et d'étain.

Le fait que le premier lithium s'alliant au magnésium ne soit pas réversible exclut la possibilité d'envisager un montage en mode déchargé comme pour l'aluminium. On devra compenser cette perte par une austuce expérimentale telle la déposition (évaporation ou colaminage) d'une quantité correspondante de lithium sur l'anode ou une sursaturation du composé cathodique inséré de lithium (Li$_x$TiS$_2$ avec x 1,3). Selon le montage de la Figure 1, on a réalisé un accumulateur utilisant un alliage dense de lithium et de magnésium. Le feuillard de magnésium d'une épaisseur de 5 µm (3,4 mg) a été embouti sur un grillage d'acier inoxydable. L'électrolyte est constitué d'une membrane de POE-LiClO$_4$ 150 µm alors que la cathode est une électrode composite MoO$_2$-noir-POE dont l'épaisseur est de 90 µm.

A partir de l'électrode auxiliaire de lithium 1, on a transformé le feuillard de magnésium en un alliage dense de composition Li$_3$Mg. La quantité de Coulombs requise à été de 40,5.

A plusieurs reprises plus de 25 Coulombs ont été cyclés réversiblement, ce qui correspond au cyclage entre LiMg et Li$_3$Mg, le premier lithium étant irréversible.

La figure 4 illustre dans un montage équivalent à celui que l'on vient de décrire, le comportement au cyclage de deux compositions de système LiMg, soit Li$_2$Mg et Li$_3$Mg. Une bonne réversibilité est obtenue entre le 1er et le 3è lithium (entre 50 et 75% at. de lithium dans le magnésium). Ceci confirme l'intérêt des alliages denses dans le cas du magnésium.

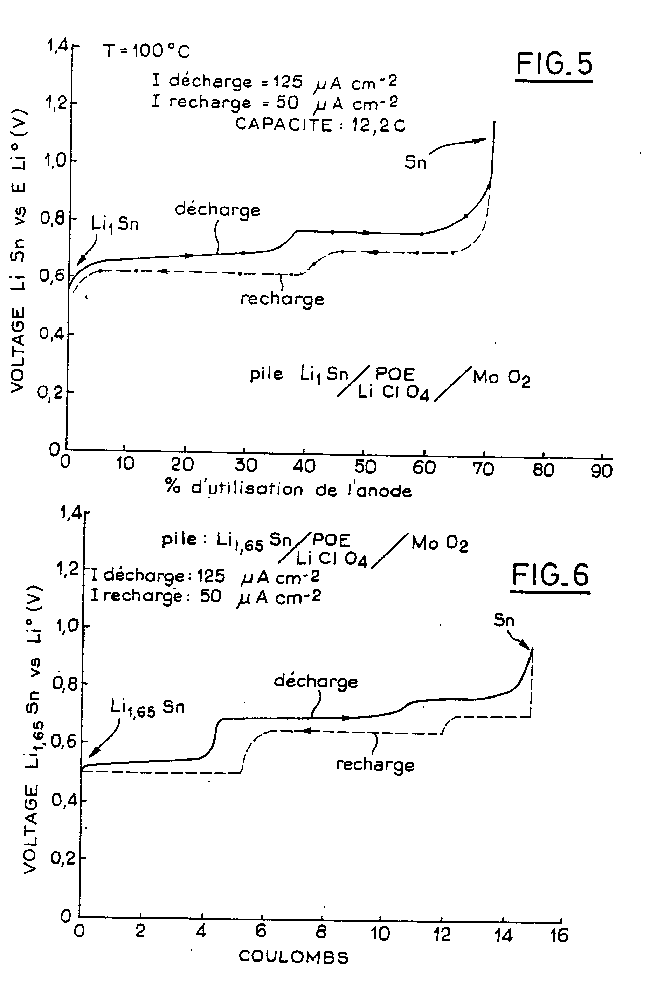

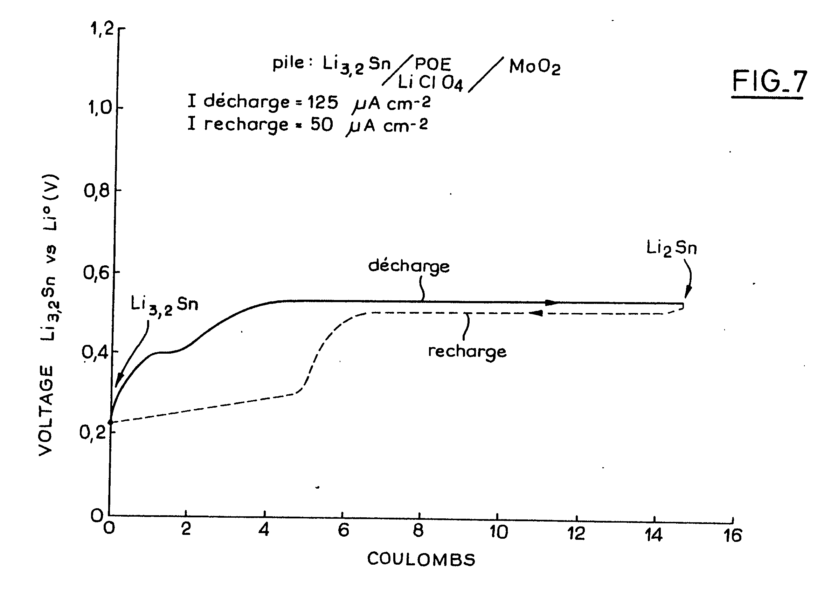

Les figures 5, 6 et 7 illustrent le comportement d'alliages LiSn formés in situ correspondant respectivement à 1 Sn, 1,65 Sn et 3,2 Sn et obtenus à l'aide du même montage ci-haut utilisé pour le magnésium. A chaque concentration un cyclage d'une dizaine de Coulombs a été réalisé et ces trois essais mettent en évidence la très bonne réversibilité des diverses phases du système Li-Sn. En particulier, pour la phase Li$_1$Sn plus de vingt cycles ont été réalisés en montrant une utilisation stabilisée de plus de 70% de la teneur en lithium.

## Revendications

1. Accumulateur électrochimique préparé à l'état déchargé et comportant une anode comprenant un feuillard métallique mince, ledit feuillard formant un précurseur d'une anode dense constituée d'un feuillard métallique compact allié avec un métal alcalin, un électrolyte solide polymère, ainsi qu'une cathode à base d'oxyde, de sulfure ou d'halogénure élaborée dans son état déchargé et constituant une source de métal alcalin, ladite cathode étant capable de libérer de façon réversible au moins une partie du métal alcalin sous l'effet d'une recharge, de sorte que le métal alcalin est introduit dans le feuillard métallique pour produire l'anode dense consistant en le feuillard métallique compact allié avec le métal alcalin, le feuillard métallique mince constituant l'anode de l'accumulateur préparé à l'état déchargé ayant une épaisseur telle que ladite anode dense ait une épaisseur comprise entre 5 µm et 100 µm.

2. Accumulateur selon la revendication 1, caractérisé en ce que le feuillard métallique est constitué d'un feuillard d'un métal choisi parmi l'aluminium, le magnésium et l'étain.

3. Accumulateur selon la revendication 2, caractérisé en ce que le métal alcalin est le lithium.

4. Accumulateur selon la revendication 3, caractérisé en ce que le feuillard métallique est constitué d'aluminium.

5. Accumulateur selon la revendication 3, caractérisé en ce que le feuillard métallique est constitué de magnésium.

6. Accumulateur selon la revendication 3, caractérisé en ce que le feuillard métallique est constitué d'étain.

7. Accumulateur selon la revendication 4, caractérisé en ce que la capacité de la cathode, exprimée en Coulombs est choisie de façon à ce que lors de la recharge effectuée à une intensité de courant convenable, on obtienne un alliage de feuillard d'aluminium et de lithium dont la teneur en atomes de lithium est d'au moins 30%.

8. Accumulateur selon la revendication 7, caractérisé en ce que ladite capacité de la cathode est choisie de façon à ce que lors de la recharge, on obtienne un alliage d'aluminium et de lithium dont la teneur en atomes de lithium est comprise entre 30 et 40%.

9. Accumulateur selon l'une des revendications 1 à 8, caractérisé en ce que l'électrolyte polymère est à base de polyéther.

10. Accumulateur selon la revendication 9, caractérisé en ce que le polyéther est associé à un sel de lithium.

11. Accumulateur selon la revendication 10, caractérisé en ce que l'électrolyte polymère comprend du polyoxyéthylène associé à du LiClO$_4$.

12. Accumulateur selon l'une des revendications 1 à 11, caractérisé en ce que la cathode est choisie

EP 0 159 937 B1

parmi $Li_xTiS_2$ et $Li_xMoO_2$ où $0<x<2$, et $Li_xV_6O_{13}$, où $0<x<8$.

13. Accumulateur selon l'une des revendications 1 à 12, caractérisé en ce que l'anode est constituée d'un feuillard d'aluminium, d'étain ou de magnésium dont l'épaisseur varie entre environ 3 μm et 50 μm l'électrolyte comprend un film mince de polyoxyéthylène et de $LiClO_4$ dont l'épaisseur se situe entre 25 μm et 150 μm, et la cathode est une électrode composite de $LiTiS_2$ dont l'épaisseur varie entre 25 μm et 100 μm.

14. Accumulateur selon la revendication 4, caractérisé en ce que le feuillard métallique comprend un colaminage partiel du métal alcalin sur le feuillard métallique.

15. Accumulateur selon la revendication 4, caractérisé en ce que le feuillard métallique comprend une couche de lithium déposée par évaporation.

16. Accumulateur selon la revendication 1, caractérisé en ce que le composé constitutif de la cathode est sursaturé en métal alcalin.

17. Accumulateur selon la revendication 3, caractérisé en ce que la cathode est à base de $Li_xTiS_2$, où $x>1$, ou $Li_xMoO_2$ où $x>1$ et $Li_xV_6O_{13}$ où $x>8$.

18. Accumulateur selon la revendication 6, caractérisé en ce que la capacité de la cathode, exprimée en Coulombs, est choisie de façon à ce que lors de la recharge effectuée à une intensité de courant convenable, on obtienne un alliage renfermant entre 0 et 3,2 atomes de Li par atome de Sn.

19. Accumulateur selon la revendication 5, caractérisé en ce que la capacité de la cathode, exprimée en Coulombs, est choisie de façon à ce que lors de la recharge effectuée à une intensité de courant convenable, on obtienne un alliage renfermant 1 à 4 atomes de Li par atomes de Mg.

20. Accumulateur selon l'une des revendications 1 à 19, caractérisé en ce que le feuillard métallique est monté sur un collecteur.

21. Accumulateur selon la revendication 20, caractérisé en ce que le collecteur est un feuillard mince conducteur, inerte par rapport à l'alliage.

22. Accumulateur selon la revendication 21, caractérisé en ce que le collecteur est constitué d'un feuillard de cuivre.

23. Accumulateur selon la revendication 21, caractérisé en ce que le collecteur est constitué d'un feuillard de plastique métallisé.

24. Accumulateur selon la revendication 21, caractérisé en ce que le collecteur est constitué d'un grillage en métal.

25. Accumulateur selon l'une des revendications 1 à 24, caractérisé en ce que le feuillard métallique est poreux de façon à ce que le métal alcalin libéré par la cathode comble les interstices définissant la porosité du feuillard métallique.

26. Méthode de préparation d'un accumulateur électrochimique à l'état chargé, ledit accumulateur étant à électrolyte solide polymère et comportant une anode dense constituée d'un feuillard métallique compact allié avec un métal alcalin, ladite anode présentant une épaisseur variant entre 5 μm et 100 μm et ayant une rechargeabilité s'étendant sur au moins 20 cycles, caractérisée en ce que l'on prépare un accumulateur électrochimique à l'état déchargé constitué d'un feuillard métallique mince formant un précurseur de l'anode dense, d'un électrolyte solide polymère et d'une cathode à base d'oxyde, de sulfure ou d'halogénure élaborée dans son état déchargé et constituant une source de métal alcalin, et l'on soumet l'accumulateur à l'état déchargé ainsi formé à une charge pour introduire du métal alcalin dans le feuillard métallique, ladite charge étant poursuivie jusqu'à ce que l'on obtienne un alliage du feuillard métallique dont la concentration en métal alcalin permet une rechargeabilité de l'accumulateur s'étendant sur au moins 20 cycles.

27. Méthode selon la revendication 26, caractérisée en ce que le feuillard métallique est choisi parmi l'aluminium, le magnésium et l'étain.

28. Méthode selon la revendication 27, caractérisée en ce que le métal alcalin est du lithium.

29. Méthode selon la revendication 27, caractérisée en ce que le feuillard métallique est en aluminium.

30. Méthode selon la revendication 27, caractérisée en ce que le feuillard métallique est en magnésium.

31. Méthode selon la revendication 27, caractérisée en ce que le feuillard métallique est en étain.

32. Méthode selon l'une des revendications 26 à 31, caractérisée en ce que la première recharge s'effectue à une intensité de courant choisie de manière à assurer une synthèse uniforme de l'alliage constituant l'anode.

33. Méthode selon la revendication 29, caractérisée en ce que la capacité de la cathode exprimée en Coulombs est choisie de façon à ce que lors de la recharge effectuée à une intensité de courant convenable, on obtienne un alliage de feuillard d'aluminium et de lithium, dont la teneur en atomes de Li est d'au moins 30%.

34. Méthode selon la revendication 33, caractérisée en ce que ladite capacité de la cathode est choisie de façon à ce que lors de la recharge, on obtienne un alliage d'aluminium et de lithium, dont la teneur en atomes de Li est comprise entre 30 et 40%.

35. Méthode selon la revendication 30, caractérisée en ce que la capacité de la cathode, exprimée en Coulombs est choisie de façon à ce que lors de la recharge effectuée à une intensité de courant convenable, on obtienne un alliage renfermant 1 à 4 atomes de Li par atome de magnésium.

36. Méthode selon la revendication 31, caractérisée en ce que la capacité de la cathode, exprimée en Coulombs est choisie de façon à ce que lors de la recharge effectuée à une intensité de courant convenable, on obtienne un alliage renfermant entre 0 et 3,2 atomes de Li par atome de Sn.

7

# EP 0 159 937 B1

**Patentansprüche**

1. Im entladenen Zustand hergestellter elektrochemischer Akkumulator mit einer ein dünnes Metallband enthaltenden Anode, wobei das Band einen Zwischenstoff einer dichten Anode bildet, bestehend aus einem festen Metallband, verbunden mit einem Alkalimetall, einem Festpolymerelektrolyt sowie mit einer Kathode auf Oxid-, Schwefel- oder Halogensalzbasis, die im entladenen Zustand hergestellt wird und eine Alkalimetallquelle darstellt, wobei die Kathode wenigstens einen Teil des Alkalimetalls bei der Wiederaufladung umkehrbar freizusetzen vermag, so daß das Alkalimetall in das Metallband eingeführt wird, um die dichte Anode, bestehend aus dem festen Metallband, das mit Alkalimetall verbunden ist, herzustellen, wobei das dünne Metallband, das die Anode des im entladenen Zustand hergestellten Akkumulators darstellt, eine solche Dicke hat, daß die dichte Anode eine Dicke zwischen 5 μm und 100 μm hat.

2. Akkumulator nach Anspruch 1, dadurch gekennzeichnet, daß das Metallband aus einem Band eines Metalls, ausgewählt aus Aluminium, Magnesium und Zinn, besteht.

3. Akkumulator nach Anspruch 2, dadurch gekennzeichnet, daß das Alkalimetal Lithium ist.

4. Akkumulator nach Anspruch 3, dadurch gekennzeichnet, daß das Metallband aus Aluminium besteht.

5. Akkumulator nach Anspruch 3, dadurch gekennzeichnet, daß das Metallband aus Magnesium besteht.

6. Akkumulator nach Anspruch 3, dadurch gekennzeichnet, daß das Metallband aus Zinn besteht.

7. Akkumulator nach Anspruch 4, dadurch gekennzeichnet, daß die Kapazität der Kathode, ausgedrückt in Coulomb, so ausgewählt ist, daß bei der mit einer geeigneten Stromstärke vorgenommenen Wiederaufladung eine Legierung des Aluminiumbandes und Lithium erhalten wird, wobei der Gehalt an Lithiumatomen mindestens 30% beträgt.

8. Akkumulator nach Anspruch 7, dadurch gekennzeichnet, daß die Kapazität der Kathode so ausgewählt ist, daß bei der Wiederaufladung eine Legierung von Aluminium und Lithium erhalten wird, wobei der Gehalt an Lithiumatomen zwischen 30 und 40% beträgt.

9. Akkumulator nach einem der Ansprüche 1 bis 8, dadurch gekennzeichnet, daß der Polymerelektrolyt einer auf der Basis von Polyether ist.

10. Akkumulator nach Anspruch 9, dadurch gekennzeichnet, daß der Polyether mit einem Lithiumsalz verbunden ist.

11. Akkumulator nach Anspruch 10, dadurch gekennzeichnet, daß der Polymerelektrolyt mit $LiClO_4$ verbundenes Polyoxyethylen enthält.

12. Akkumulator nach einem der Ansprüche 1 bis 11, dadurch gekennzeichnet, daß die Kathode aus $Li_xTiS_2$ und $Li_xMoO_2$, wobei $0<x<2$, und $Li_xV_6O_{13}$, wobei $0<x<8$, ausgewählt ist.

13. Akkumulator nach einem der Ansprüche 1 bis 12, dadurch gekennzeichnet, daß die Anode aus einem Aluminium-, Zinn- oder Magnesiumband besteht, dessen Dicke zwischen ca. 3 μm und 50 μm variiert, daß der Elektrolyt eine dünne Polyoxyethylen- und $LiClO_4$-Folie enthält, deren Dicke zwischen 25 μm und 150 μm liegt, und daß die Kathode eine Verbundelektrode von $LiTiS_2$ ist, deren Dicke zwischen 25 μm und 100 μm variiert.

14. Akkumulator nach Anspruch 4, dadurch gekennzeichnet, daß das Metallband eine teilweise Colaminierung aus Alkalimetall auf dem Metallband enthält.

15. Akkumulator nach Anspruch 4, dadurch gekennzeichnet, daß das Metallband eine durch Aufdampfen aufgebrachte Lithiumschicht enthält.

16. Akkumulator nach Anspruch 1, dadurch gekennzeichnet, daß die Grundzusammensetzung der Kathode an Alkalimetall übersättigt ist.

17. Akkumulator nach Anspruch 3, dadurch gekennzeichnet, daß die Kathode auf der Basis von $Li_xTiS_2$, wobei $x>1$, oder $Li_xMoO_2$, wobei $x>1$ und $Li_xV_6O_{13}$, wobei $x>8$, ist.

18. Akkumulator nach Anspruch 6, dadurch gekennzeichnet, daß die Kapazität der Kathode, ausgedrückt in Coulomb, so ausgewählt ist, daß bei der mit einer geeigneten Stromstärke vorgenommenen Wiederaufladung eine Legierung erhalten wird, die zwischen 0 und 3,2 Li-Atome pro Sn-Atom umfasst.

19. Akkumulator nach Anspruch 5, dadurch gekennzeichnet, daß die Kapazität der Kathode, ausgedrückt in Coulomb, so ausgewählt ist, daß bei der mit einer geeigneten Stromstärke vorgenommenen Wiederaufladung eine Legierung erhalten wird, die zwischen 1 bis 4 Li-Atome pro Mg-Atome umfasst.

20. Akkumulator nach einem der Ansprüche 1 bis 19, dadurch gekennzeichnet, daß das Metallband auf einem Kollektor angebracht wird.

21. Akkumulator nach Anspruch 20, dadurch gekennzeichnet, daß der Kollektor ein dünnes leitfähiges Band ist, welches im Verhältnis zur Legierung inert ist.

22. Akkumulator nach Anspruch 21, dadurch gekennzeichnet, daß der Kollektor aus einem Kupferband besteht.

23. Akkumulator nach Anspruch 21, dadurch gekennzeichnet, daß der Kollektor aus einem metallisierten Kunststoffband besteht.

8

24. Akkumulator nach Anspruch 21, dadurch gekennzeichnet, daß der Kollektor aus einem Metallgitter besteht.

25. Akkumulator nach einem der Ansprüche 1 bis 24, dadurch gekennzeichnet, daß das Metallband derart porös ist, daß das durch die Kathode freigesetzte Alkalimetall die Zwischenräume ausfüllt, die die Porosität des Metallbandes bestimmen.

26. Verfahren zur Herstellung eines elektrochemischen Akkumulators im geladenen Zustand, wobei der Akkumulator einen Festpolymerelektrolyten und eine dichte Anode hat, die aus einem festen Metallband, verbunden mit einem Alkalimetall, besteht, wobei die Anode eine Dicke zwischen 5 µm und 100 µm aufweist und eine Wiederaufladbarkeit auf mindestens 20 Zyklen hat, dadurch gekennzeichnet, daß man einen elektrochemischen Akkumulator im entladenen Zustand, bestehend aus einem dünnen Metallband, das einen Zwischenstoff der dichten Anode bildet, einem Festpolymerelektrolyt und einer Kathode auf Oxid-, Schwefel- oder Halogensalzbasis, die im entladenen Zustand hergestellt wird und eine Alkalimetallquelle darstellt, herstellt, und daß man den so hergestellten Akkumulator im entladenen Zustand einer Ladung unterwirft, um Alkalimetall in das Metallband einzuführen, wobei die Ladung so lange fortgeführt wird, bis man eine Legierung des Metallbandes erhält, dessen Alkalimetallkonzentration eine Wiederaufladbarkeit des Akkumulators bis auf mindestens 20 Zyklen erlaubt.

27. Verfahren nach Anspruch 26, dadurch gekennzeichnet, daß das Metallband ausgewählt ist aus Aluminium, Magnesium und Zinn.

28. Verfahren nach Anspruch 27, dadurch gekennzeichnet, daß das Alkalimetall Lithium ist.

29. Verfahren nach Anspruch 27, dadurch gekennzeichnet, daß das Metallband aus Aluminium ist.

30. Verfahren nach Anspruch 27, dadurch gekennzeichnet, daß das Metallband aus Magnesium ist.

31. Verfahren nach Anspruch 27, dadurch gekennzeichnet, daß das Metallband aus Zinn ist.

32. Verfahren nach einem der Ansprüche 26 bis 31, dadurch gekennzeichnet, daß die erste Ladung bei einer Stromstärke vorgenommen wird, die derart ausgewählt ist, um eine gleichmäßige Synthese der die Anode bildenden Legierung zu gewährleisten.

33. Verfahren nach Anspruch 29, dadurch gekennzeichnet, daß die Kapazität der Kathode, ausgedrückt in Coulombs, so ausgewählt ist, daß bei der mit einer geeigneten Stromstärke vorgenommenen Wiederaufladung eine Legierung des Aluminiumbandes und Lithium erhalten wird, wobei der Gehalt an Lithiumatomen mindestens 30% beträgt.

34. Verfahren nach Anspruch 33, dadurch gekennzeichnet, daß die Kapazität der Kathode so ausgewählt ist, daß bei der Wiederaufladung eine Legierung von Aluminium und Lithium erhalten wird, wobei der Gehalt an Lithiumatomen zwischen 30 und 40% beträgt.

35. Verfahren nach Anspruch 30, dadurch gekennzeichnet, daß die Kapazität der Kathode, ausgedrückt in Coulomb, so ausgewählt ist, daß bei der mit einer geeigneten Stromstärke vorgenommenen Wiederaufladung eine Legierung erhalten wird, die zwischen 1 bis 4 Li-Atome pro Mg-Atome umfasst.

36. Verfahren nach Anspruch 31, dadurch gekennzeichnet, daß die Kapazität der Kathode, ausgedrückt in Coulomb, so ausgewählt ist, daß bei der mit einer geeigneten Stromstärke vorgenommenen Wiederaufladung eine Legierung erhalten wird, die zwischen 0 und 3,2 Li-Atome pro Sn-Atom umfasst.

## Claims

1. Electrochemical battery prepared in the discharge state and comprising an anode having a thin metal strip, the said strip forming a precursor for a dense anode consisting of a compact metallic strip alloyed with an alkali metal, a solid polymer electrolyte, and an oxide, sulphide or halide-based cathode produced in its discharged state and forming an alkali metal source, the said cathode being able to release in a reversible manner at least some of the alkali metal under the effect of an additional charge, such that the alkali metal is introduced into the metal strip so as to produce the dense anode consisting of the compact metal strip alloyed with the alkali metal, the thin metal strip forming the anode for the battery prepared in the discharged state having a thickness such that the said dense anode has a thickness between 5 µm and 100 µm.

2. Battery according to Claim 1, characterised in that the metal strip consists of a strip of a metal selected from aluminium, magnesium and tin.

3. Battery according to Claim 2, characterised in that the alkali metal is lithium.

4. Battery according to Claim 3, characterised in that the metal strip consists of aluminium.

5. Battery according to Claim 3, characterised in that the metal strip consists of magnesium.

6. Battery according to Claim 3, characterised in that the metal strip consists of tin.

7. Battery according to Claim 4, characterised in that the capacity of the cathode, expressed in Coulombs is selected such that during the recharging process carried out at a suitable current intensity an alloy of the aluminium strip and lithium is obtained of which the lithium atom content is at least 30%.

8. Battery according to Claim 7, characterised in that the said capacity of the cathode is selected such that during the recharging process, an aluminium and lithium alloy is obtained of which the lithium atom content is between 30% and 40%.

9. Battery according to any of Claims 1 to 8, characterised in that the polymer electrolyte is polyether based.

10. Battery according to Claim 9, characterised in that the polyether is combined with a lithium salt.

9

11. Battery according to Claim 10, characterised in that the polymer electrolyte comprises polyoxyethylene combined with $LiClO_4$.

12. Battery according to any one of Claims 1 to 11, characterised in that the cathode is selected from $Li_xTiS_2$ and $Li_xMoO_2$ where $0<x<2$, and $Li_xV_6O_{13}$, where $0<x<8$.

13. Battery according to any one of Claims 1 to 12, characterised in that the anode consists of a strip of aluminium, tin or magnesium, the thickness of which varies between approximately 3 μm and 50 μm, the electrolyte comprising a thin film of polyoxyethylene and $LiClO_4$, the thickness of which is between 25 μm and 150 μm, and the cathode is a composite electrode of $LiTiS_2$, the thickness of which varies between 25 μm and 100 μm.

14. Battery according to Claim 4, characterised in that the metal strip comprises a partial co-rolling of the alkali metal on the metal strip.

15. Battery according to Claim 4, characterised in that the metal strip comprises a layer of lithium deposited by evaporation.

16. Battery according to Claim 1, characterised in that the compound constituting the cathode is supersaturated with alkali metal.

17. Battery according to Claim 3, characterised in that the cathode is based on $Li_xTiS_2$, where $x>1$, or $Li_xMoO_2$ where $x>1$ and $Li_xV_6O_{13}$ where $x>8$.

18. Battery according to Claim 6, characterised in that the capacity of the cathode, expressed in Coulombs, is selected such that during the recharging process performed at a suitable current intensity an alloy comprising between 0 and 3.2 Li atoms per Sn atom is obtained.

19. Battery according to Claim 5, characterised in that the capacity of the cathode, expressed in Coulombs, is selected such that during the recharging process performed at a suitable current intensity an alloy comprising 1 to 4 lithium atoms per magnesium atom is obtained.

20. Battery according to any of Claims 1 to 19, characterised in that the metal strip is mounted on a collector.

21. Battery according to Claim 20, characterised in that the collector is a thin conductor strip, which is inert with respect to the alloy.

22. Battery according to Claim 21, characterised in that the collector consists of a copper strip.

23. Battery according to Claim 21, characterised in that the collector consists of a metallised plastic strip.

24. Battery according to Claim 21, characterised in that the collector consists of a metal grating.

25. Battery according to any one of Claims 1 to 24, characterised in that the metal strip is porous such that the alkali metal released by the cathode fills the gaps defining the pores of the metal strip.

26. Method of preparing an electrochemical battery in the charged state, the said battery having a solid polymer electrolyte and comprising a dense anode consisting of a compact metal strip alloyed with an alkali metal, the said anode having a thickness varying between 5 μm and 100 μm and being rechargeable over at least 20 cycles, characterised in that there is prepared an electrochemical battery in the discharged state consisting of a thin metal strip forming a precursor for the dense anode, a solid polymer electrolyte and an oxide, sulphide or halide-based cathode produced in its discharged state and forming an alkali metal source, and the battery thus formed in the discharged state is subjected to a charge in order to introduce alkali metal into the metal strip, the said charge being continued until an alloy of the metal strip, of which the concentration of alkali metal enables the battery to be recharged over at least 20 cycles, is obtained.

27. Method according to Claim 26, characterised in that the metal strip is selected from aluminium, magnesium and tin.

28. Method according to Claim 27, characterised in that the alkali metal is lithium.

29. Method according to Claim 27, characterised in that the metal strip is aluminium.

30. Method according to Claim 27, characterised in that the metal strip is magnesium.

31. Method according to Claim 27, characterised in that the metal strip is tin.

32. Method according to any one of Claims 26 to 31, characterised in that the first charging operation is performed at a current intensity selected so as to ensure a uniform synthesis of the alloy forming the anode.

33. Method according to Claim 9, characterised in that the capacity of the cathode expressed in Coulombs is selected such that during the recharging process performed at a suitable current intensity an alloy of the aluminium strip and lithium is obtained, of which the lithium atom content is at least 30%.

34. Method according to Claim 33, characterised in that the said capacity of the cathode is selected such that during the recharging process an aluminium and lithium alloy is obtained of which the lithium atom content is between 30 and 40%.

35. Method according to Claim 30, characterised in that the capacity of the cathode expressed in Coulombs is selected such that during the recharging performed at a suitable current intensity, an alloy comprising 1 to 4 lithium atoms per magnesium atom is obtained.

36. Method according to Claim 31, characterised in that the capacity of the cathode expressed in Coulombs is selected such that during the recharging operation performed at a suitable current intensity, an alloy comprising between 0 and 3.2 lithium atoms per Sn atom is obtained.

FIG_1

FIG_2

FIG_3

1 ——— i = 0,5 mA
2 —·—·— i = 1 mA
3 ——— i = 2 mA
4 — — i = 3 mA
5 ----- i = 5,7 mA

Pile Li Al / POE / Mo O₂
Li Cl O₄
Cap : 13 C
T = 100 °C
S = 3,8 cm²

FIG_4

Li Mg / POE / Li
Li Cl O₄
T = 100 °C
C = 13,6 C
S = 3,8 cm²

I décharge = -500 µA
I recharge = +200 µA

1 cyclage Li₃Mg - Li₁Mg
2 cyclage Li₂Mg - Li₁Mg

FIG. 5

T = 100 °C

I décharge = 125 $\mu$A cm$^{-2}$
I recharge = 50 $\mu$A cm$^{-2}$
CAPACITE : 12,2 C

VOLTAGE Li Sn vs E Li° (V)

décharge

Li$_1$Sn

Sn

recharge

pile Li$_1$Sn / POE / Mo O$_2$
Li Cl O$_4$

% d'utilisation de l'anode

FIG. 6

pile : Li$_{1,65}$Sn / POE / Mo O$_2$
Li Cl O$_4$

I décharge : 125 $\mu$A cm$^{-2}$
I recharge : 50 $\mu$A cm$^{-2}$

VOLTAGE Li$_{1,65}$Sn vs Li° (V)

décharge

Li$_{1,65}$Sn

Sn

recharge

COULOMBS

pile : $Li_{3,2}Sn$ / POE / $MoO_2$
/ $LiClO_4$ /

I décharge = 125 $\mu A\ cm^{-2}$
I recharge = 50 $\mu A\ cm^{-2}$

FIG. 7

$Li_{3,2}Sn$

$Li_2Sn$

décharge

recharge

VOLTAGE $Li_{3,2}Sn$ vs $Li°$ (V)

COULOMBS

EP 0 159 937 B1